# FASCICULE DE BREVET EUROPEEN

(11) **EP 0 791 295 B1**
(45) Date de publication et mention de la délivrance du brevet: **02.07.2003**
(21) Numéro de dépôt: 97400397.2
(22) Date de dépôt: 24.02.1997
(51) Int. Cl.: A21C 13/02, A21B 7/00

(54) **Ligne flexible de panification**
Flexibele Fertigungsstrasse für Brot
Flexible bread production line

(30) Priorité: 23.02.1996 FR 9602277
(43) Date de publication de la demande: 27.08.1997
(73) Titulaire: Gouet S.A., 76260 Eu (FR)
(72) Inventeur: Sergent, Olivier, 76630 Assigny (FR); Villa, Lucien, 80350 Mers Les Bains (FR)
(74) Mandataire: Santarelli

(56) Documents cités:
- WO-A-88/06408
- DE-A- 3 544 738
- DE-B- 1 133 683
- FR-A- 2 594 296
- GB-A- 745 397
- GB-A- 985 054
- US-A- 4 610 886

## Description

L'invention concerne la fabrication industrielle de produits de boulangerie ou analogue, notamment pains, avec des temps de séjour variables et indépendants les uns des autres dans chacune des étapes du procédé.

Les procédés de fabrication de pains surgelés comprennent les étapes suivantes : fermentation, cuisson ou précuisson, refroidissement et surgélation.

Au cours de l'étape de fermentation, le pain transite, pendant une durée de 1 à 2 heures, dans une ambiance contrôlée en température et en hygrométrie (par exemple, pour le pain français, environ 27°C et 75 % d'humidité). Au cours de l'étape de cuisson ou précuisson, le pain transite environ 10 à 12 minutes dans une ambiance aux environs de 170°C, dans laquelle de la vapeur est introduite. Au cours de l'étape de refroidissement, le pain transite, pendant une durée d'environ ½ heure dans une enceinte dans laquelle circule un important flux d'air à la température ambiante ou refroidi. Le pain ressort de l'étape de refroidissement aux environs de 40°C. Au cours de l'étape de surgélation, le pain transite, pendant une durée de 1 heure dans une ambiance à une température d'environ -35°C.

Dans une ligne de panification industrielle, les étapes ci-dessus de fermentation, cuisson ou précuisson, refroidissement et surgélation ci-dessus sont effectuées chacune dans un module, ledit module pouvant être composé de plusieurs sous-modules, placés en série. Ces étapes sont précédées d'une phase de façonnage, effectuée dans la ligne de façonnage, dans laquelle sont produites des "ébauches" de pains, également appelées "pâtons". La cadence de la ligne de production est donnée par la cadence de la ligne de façonnage.

Dans les procédés industriels actuels, la cadence de la ligne de façonnage impose, pour un équipement donné, des temps de séjour des pâtons dans chacune des étapes. Ce manque de flexibilité est un problème majeur car les processus d'élaboration ne sont pas les mêmes pour différents types de pain et ils sont, de toute façon amenés à évoluer avec l'évolution des améliorants et des farines.

Pour pallier ce problème, la solution retenue jusqu'à présent a été de scinder les différents modules en sous-modules - en pratique au maximum 3-4 sous-modules - qui peuvent être "by-passés" pour y réduire le temps de séjour. Cependant, une telle solution, ne permettant d'agir que par "marches" importantes, manque de finesse. Par exemple, dans le cas où un module est composé de trois sous-modules et où l'on "by-passe" un sous-module, le temps de séjour est réduit brutalement de 30 pour cent.

Dans ce contexte, le WO-O-88/06408 de GRANDI décrit un dispositif pour cuire ou réfrigérer des aliments à durée de cuisson ou de refroidissement variable. Le procédé décrit dans ce document consiste à "by passer" des piles complètes ou à n'utiliser qu'une partie des piles.

Selon le DE-A-1 133 683 de OOMS, on a proposé de régler la phase préalable à la cuisson , c'est à dire, la fermentation, de produits de boulangerie; ce réglage est obtenu en déplaçant selon un débit constant les produits avant leur entrée dans le four de cuisson, le long d'une trajectoire dont on fait varier la longueur. Le procédé décrit dans de document ne prévoit pas l'application au réglage de la durée pendant laquelle les produits sont maintenus dans une enceinte de traitement, néanmoins on voit qu'en imaginant une telle application, ceci conduirait à une installation compliquée et encombrante.

Les solutions de l'art antérieur imposent la multiplication des transferts mécaniques rendus nécessaires par la cinématique complexe qu'elles prévoient.

La présente invention surmonte ce problème et propose une ligne de fabrication industrielle de produits de boulangerie ou analogue, dans laquelle des pâtons issus d'une phase de façonnage sont disposés sur des cadres et dans laquelle au moins une des étapes de fermentation, cuisson ou précuisson, refroidissement et surgélation est effectuée dans un module comprenant au moins un élévateur sur lequel viennent s'accrocher lesdits cadres, entraînés en avance verticalement à travers ledit module, ladite ligne de fabrication étant caractérisée en ce que le nombre de cadres dans un tel module est rendu variable par variation du pas entre les cadres.

La présente invention permet, dans chaque module, de placer le cadre dans l'élévateur à n'importe quel niveau. Plus grande est la souplesse dans ce positionnement, plus fines seront les variations de temps de séjour.

L'accroche du cadre peut être réalisée par différents moyens. Les cadres peuvent être entraînés de façon positive ou bien ils peuvent être embrayés sur l'élévateur par friction, ou par effet de coin.

Dans un premier mode de réalisation de la présente invention, où l'on entraîne les cadres de façon positive, l'élévateur d'un module comporte des supports équidistants adaptés à s'engager sur les deux bords opposés d'un cadre, en nombre supérieur à celui des cadres pouvant se trouver dans ledit module.

L'élévateur peut avancer en pas à pas, auquel cas on vient glisser le cadre sur le support qui se présente pendant la phase d'arrêt.

L'entraînement positif selon la présente invention peut être réalisé avec des supports de cadres liés à la chaîne d'entraînement de l'élévateur.

Dans un deuxième mode de réalisation de la présente invention, à entraînement par friction, les cadres sont embrayables sur l'élévateur à l'entrée de chacun des modules. Sur un élévateur qui avance en continu, ou pas à pas à chaque temps de cycle, on vient embrayer le cadre qui se présente à l'arrêt du module. Cet embrayage peut être réalisé au moyen d'un coincement sur un câble, au moyen d'une pression assurée par un ressort libéré au moment de l'embrayage, ou au moyen d'une force électromagnétique ou magnétique libérée au moment de l'embrayage.

La cadence de la ligne étant constante, moins il y a de cadres dans une enceinte, moins le temps de séjour des pâtons y est important. La différence de nombre de cadres dans la ligne suivant les configurations est absorbée dans un stockeur en fin de ligne.

Selon une variante, un module comporte au moins deux sous-modules, et le nombre de cadres dans chacun desdits sous-modules est variable.

Habituellement, les pâtons sont déposés dans des filets qui sont à leur tour déposés dans des cadres. Cependant, les filets peuvent être convoyés directement sans être déposés dans des cadres. Il est bien entendu que l'invention s'applique tout aussi bien dans ce dernier cas et que le mot "cadre" doit être pris dans un sens large.

L'invention sera à présent décrite en référence aux Figures annexées dans lesquelles :
- la Figure 1 est une vue schématique en perspective d'un élévateur selon la présente invention;
- la Figure 2 est une vue schématique en perspective d'un élévateur selon l'art antérieur;
- la Figure 3 est une vue en perspective d'un élévateur selon la présente invention où sont représentés les guides d'entrée et de sortie;
- la Figure 4 est une vue en coupe selon l'axe entrée-sortie I-I' de la Figure 3;
- les Figures 5 à 10 sont des vues schématiques d'un élévateur comportant un nombre de cadres variables selon la présente invention (sur chacune de ces Figures les cadres ont été coupés);

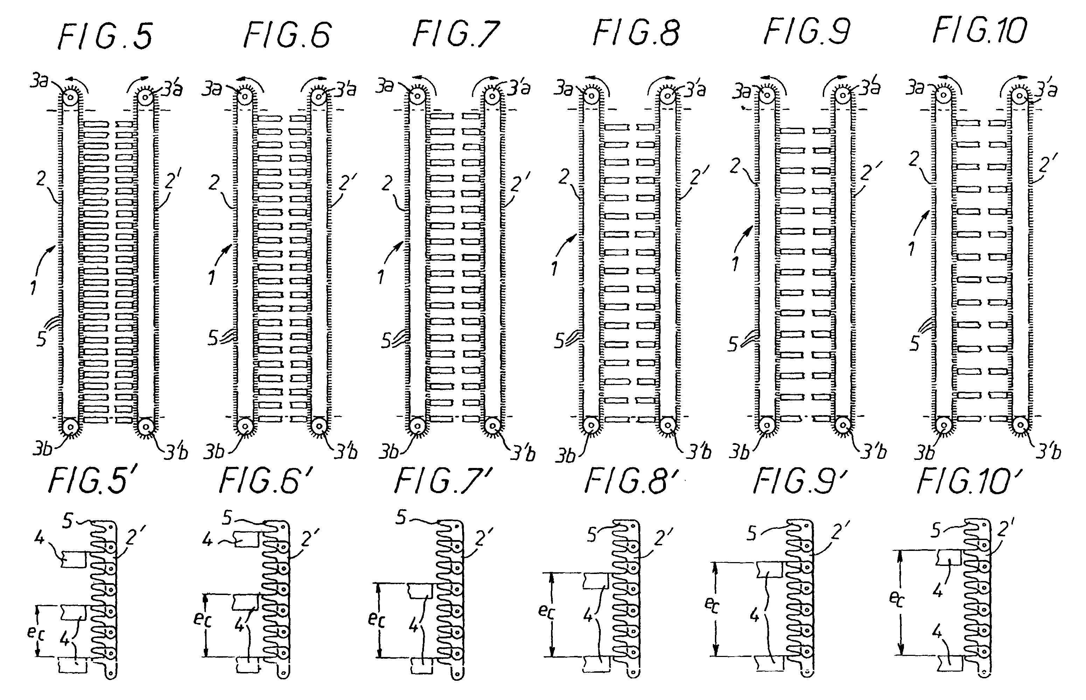

- les Figures 5' à 10' sont des vues de détail des Figures 5 à 10 représentant une partie (maillons de la chaîne) de l'élévateur, (sur chacune de ces Figures les cadres ont été coupés).

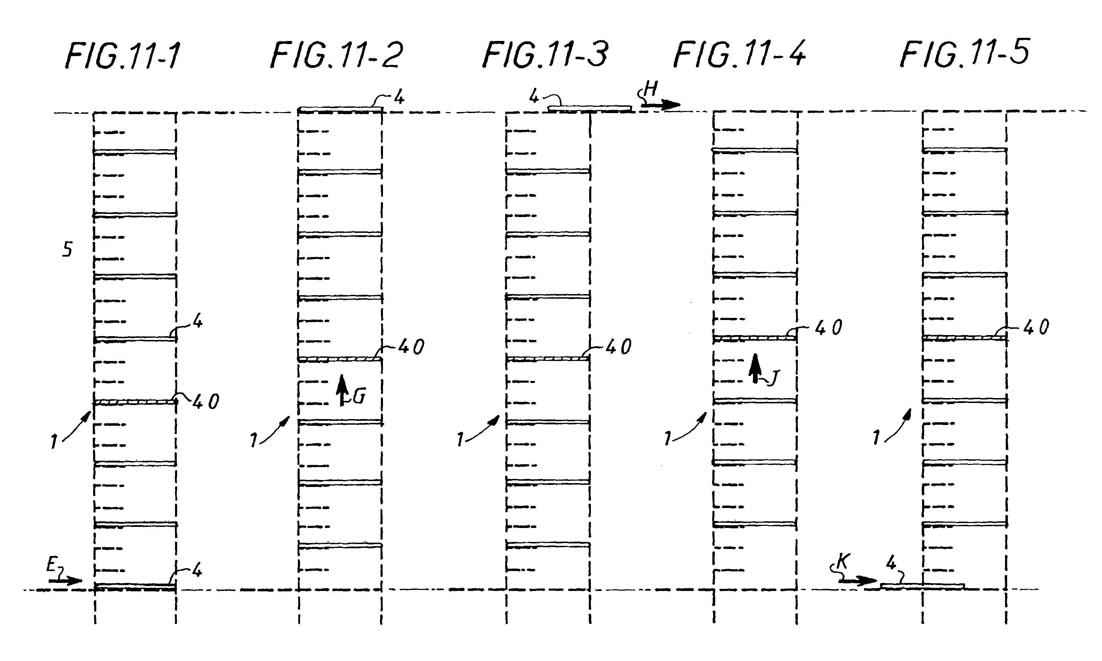

Les Figures 11-1 à 11-5 illustrent un schéma de principe d'une noria à pas variable selon la présente invention.

L'élévateur 1 du module de cuisson est constitué de deux nappes sans fin (ou chaînes) 2 et 2', passant sur des galets de renvoi supérieurs 3a et 3'a et inférieurs 3b et 3'b. Durant la phase d'élévation, les cadres 4 portant les pâtons (non représentés) sont entraînés verticalement vers le haut dans le sens de la flèche H, de façon connue en soi.

Les supports de cadres 5, par exemple en tôle, sont solidaires d'une chaîne, chaque axe de chaîne supportant simultanément le bas du support supérieur et le haut du support inférieur. Chaque cadre repose, pendant la phase d'élévation, sur deux supports de chaîne de chaque côté.

Pour l'alimentation comme pour la sortie de l'élévateur, il faut guider le cadre sur toute sa longueur.

Pour l'alimentation suivant la flèche E, deux guides d'entrée 7 et 7' sont disposés sur toute la longueur du cadre, sur lesquels glisse le cadre.

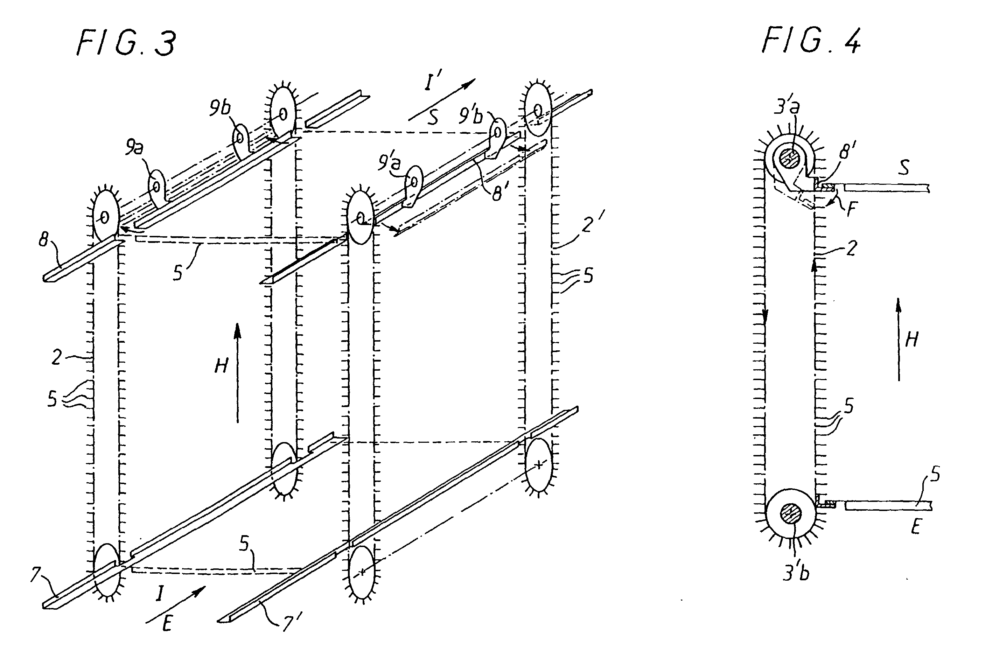

Pour la sortie, les guides de sortie 8 et 8' ne peuvent être laissés à poste fixe, puisqu'ils empêcheraient la montée des cadres : les guides de sortie 8 et 8' sont donc escamotables. Pendant la phase d'élévation, les guides de sortie 8 et 8' sont escamotés selon la flèche F au moyen des articulations escamotables 9a et 9b et 9'a et 9'b. Sur les Figures 3 et 4, le guide de sortie 8 escamoté est représenté en pointillés. Pendant la phase de sortie du cadre suivant la flèche S, les guides de sortie 8 et 8' sont mis en position et offrent un chemin de glissement au cadre.

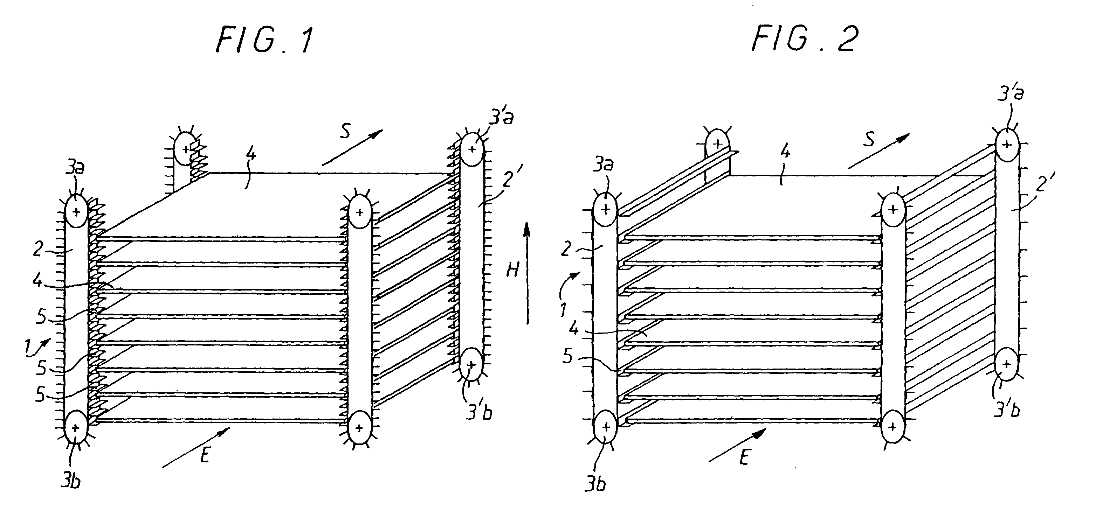

Comme on le voit sur la Figure 2, dans un élévateur selon l'art antérieur, le nombre de cadres 4 dans le module est égal à celui des supports, contrairement à la présente invention

La cinématique d'une noria à pas variable selon la présente invention est la suivante :
- Alimentation en E d'un cadre 4 (Figure 11-1);
- Elévation suivant G de la noria jusqu'à détection au niveau de la sortie, de la présence du cadre 4 (Figure 11-2);
- Sortie du cadre 4 au niveau "haut" (Figure 11-3);
- Continuation du mouvement d'élévation de la hauteur nécessaire et suffisante pour élever le dernier cadre alimenté du pas désiré (Figure 11-4);
- Alimentation d'un nouveau cadre 4 par K (Figure 11-5).

La phase de la Figure 11-4 définit le pas de la noria 1. On peut suivre l'élévation du cadre repéré par 40 depuis la phase de la Figure 11-1 jusqu'à la phase de la Figure 11-4.

L'invention sera à présent illustrée par l'Exemple non limitatif suivant.

### Exemple

Dans une ligne de panification industrielle, la ligne de façonnage a une cadence de 2500 pâtons à l'heure.

Les pâtons (non représentés) sont placés dans des filets (non représentés), à raison de 7 pâtons par filet, qui sont à leur tour posés sur des cadres 4, à raison de 5 filets par cadre.

On a donc 71 cadres par heure, soit une cadence de 1 cadre toutes les 50 secondes.

Sur l'élévateur 1 du module de cuisson ayant une hauteur de 405 cm, on dispose 135 supports de cadres 4 liés aux chaînes (ou nappes sans fin) 2 et 2', espacés de 3 cm.

Compte tenu de l'épaisseur du support et de l'épaisseur des pâtons (non représentés), l'écart minimum entre deux cadres 4 est de 15 cm. On peut donc disposer au maximum un cadre tous les cinq supports (soit 4 supports 5 vides entre 2 cadres). On a alors 27 cadres dans le module, ce qui conduit à un temps de séjour dans ce module de 27x50 s = 22 minutes 30 secondes.

Le Tableau ci-après indique pour chaque espacement des cadres (exprimé par nombre "N" pour des cadres tous les N supports), le pas e_{c} entre les cadres, le nombre de cadres et le temps de séjour dans le module considéré.

**Tableau**

| Espacement des cadres dans le module, N | e_{c}, pas entre les cadres, cm | Nombre de cadres dans le module | Temps de séjour dans le module | Figures |
|---|---|---|---|---|
| 5 | 15 | 27 | 22 mn 30 s | 5 et 5' |
| 6 | 18 | 23 | 19 mn 10 s | 6 et 6' |
| 7 | 21 | 20 | 16 mn 40 s | 7 et 7' |
| 8 | 24 | 17 | 14 mn 10 s | 8 et 8' |
| 9 | 27 | 15 | 12 mn 30 s | 9 et 9' |
| 10 | 30 | 13 | 10 mn 50 s | 10 et 10' |

Afin d'augmenter encore la souplesse d'utilisation de la ligne de la présente invention, il est possible de faire varier le pas entre les cadres tous les x cadres. Ainsi, au lieu, par exemple, de passer directement de 27 à 23 cadres, on pourra avoir un incrément de 1 cadre.

On voit, d'après le Tableau ci-dessus, qu'en faisant varier le nombre de cadres dans un module selon la présente invention, on peut faire varier finement le temps de séjour dans un module, c'est-à-dire dans une étape, ceci avec une cadence de façonnage des pâtons constante.

Pour avoir un réglage encore plus fin, on peut faire varier indépendamment le nombre de cadres dans les sous-modules d'un même module.

La hauteur entre l'entrée et la sortie étant fixe, le nombre de cadres multiplié par l'écart entre les cadres ne correspond pas à la distance entre l'entrée et la sortie. Par conséquent, le cycle imposé pour l'élévateur est le suivant : alimentation d'un cadre en entrée, avance de l'élévateur jusqu'à présenter un cadre à la sortie, puis fin de cycle pour compléter le pas, comme l'illustre la Figure 11.

Il est clair que l'on peut de la même façon faire varier indépendamment - et finement - les temps de séjour des pâtons dans chacune des étapes de leur processus de fabrication industrielle, avec une cadence de façonnage constante. Bien que l'invention ait été plus particulièrement décrite en référence à la fabrication industrielle de pain surgelé, il faut comprendre qu'elle peut s'appliquer tout aussi bien à la fabrication industrielle d'autres pains ou produits de boulangerie, ou analogues, en restant dans le cadre des revendications annexées.

## Revendications

1. Ligne de fabrication industrielle de produits de boulangerie ou analogues, dans laquelle des pâtons issus d'une phase de façonnage sont disposés sur des cadres (4) et dans laquelle au moins une des étapes de fermentation, cuisson ou précuisson, refroidissement et surgélation est effectuée dans un module comprenant au moins un élévateur (1) sur lequel viennent s'accrocher lesdits cadres, entraînés en avance verticalement à travers ledit module, ladite ligne de fabrication étant **caractérisée en ce que** le nombre de cadres dans un tel module est rendu variable par variation du pas entre les cadres.

2. Ligne de fabrication selon la revendication 1, **caractérisée en ce que** l'élévateur d'un module comporte des supports (5) ou points d'accrochage de cadres, horizontaux équidistants adaptés à s'engager sur les deux bords opposés d'un cadre, en nombre supérieur à celui des cadres (4) pouvant se trouver dans ledit module.

3. Ligne de fabrication selon la revendication 1, **caractérisée en ce que** les cadres (4) sont embrayables sur l'élévateur à l'entrée dudit module.

4. Ligne de fabrication selon la revendication 3, **caractérisée en ce que** l'embrayage est réalisé au moyen d'un coincement sur un câble, au moyen d'une pression assurée par un ressort libéré au moment de l'embrayage, ou au moyen d'une force électromagnétique ou magnétique libérée au moment de l'embrayage.

5. Ligne de fabrication selon l'une quelconque des revendications 1 à 4, dans laquelle au moins un module comporte au moins deux sous-modules, **caractérisée en ce que** le nombre de cadres dans chacun desdits sous-modules est variable.

6. Ligne de fabrication selon l'une quelconque des revendications 1 à 5, **caractérisée en ce que** l'étape de cuisson est effectuée dans un module comportant un élévateur constitué de deux nappes sans fin (2, 2').

7. Ligne de fabrication selon l'une quelconque des revendications 1 à 6, dans laquelle les cadres sortent de leur module sur des guides de sortie (8, 8'), **caractérisée en ce que** lesdits guides de sortie sont escamotables.

8. Ligne de fabrication selon l'une quelconque des revendications 1 à 7, **caractérisée en ce que** au moins un des modules est constitué d'au moins deux sous-modules.

9. Ligne de fabrication selon la revendication 8, **caractérisée en ce que** ledit au moins un sous-module a un nombre de cadres indépendamment variable.

## Patentansprüche

1. Industrielle Herstellungsanlage für Bäckereiprodukte oder dergleichen, in der Teigstücke, ausgehend von einer Bildungsphase an Rahmen (4) angeordnet sind und bei welcher zumindest einer von den Schritten Fermentierung bzw. Quellen bzw. Gehen, Backen oder Vorbacken, Abkühlen und Tiefkühlung in einem Modul durchgeführt wird, umfassend zumindest eine Hubeinrichtung (1), an welcher die Rahmen aufhängbar sind, in vertikaler Richtung vorwertig angetrieben, durch das Modul hindurch, wobei die Herstellungsanlage **dadurch gekennzeichnet ist, dass** die Anzahl an Rahmen in solch einem Modul variabel gestaltet ist, durch die Veränderung der Ganghöhe bzw. Beabstandung zwischen den Rahmen.

2. Herstellungsanlage nach Anspruch 1, **dadurch gekennzeichnet, dass** die Hubeinrichtung eines Moduls Stützen (5) oder Rahmenaufhängungspunkte umfasst, horizontal, äquidistant, vorgesehen zum Eingriff an zwei einander gegenüberliegenden Rändern eines Rahmens, bei einer Anzahl, die größer ist als jene der Rahmen (4), die sich in dem Modul befinden können.

3. Herstellungsanlage nach Anspruch 1, **dadurch gekennzeichnet, dass** die Rahmen (4) an der Hubeinrichtung am Eintritt des Modules in Eingriff bringbar sind.

4. Herstellungsanlage nach Anspruch 3, **dadurch gekennzeichnet, dass** der Eingriff dargestellt wird mittels einer Verklemmung an einem Kabel mittels eines Druckes, der durch eine Feder gewährleistet wird, freigegeben zum Zeitpunkt des Eingreifens oder mittels einer elektromagnetischen oder magnetischen Kraft, die zum Zeitpunkt des Eingreifens bewirkt oder freigegeben wird.

5. Herstellungsanlage nach einem der Ansprüche 1 bis 4, bei welcher zumindest ein Modul zumindest zwei Untermodule umfasst, **dadurch gekennzeichnet, dass** die Anzahl an Rahmen in jedem der Untermodule variabel ist.

6. Herstellungsanlage nach einem der Ansprüche 1 bis 5, **dadurch gekennzeichnet, dass** der Schritt des Backens in einem Modul durchgeführt wird, umfassend eine Hubeinrichtung, die aus zwei Endlosbändern (2, 2') gebildet ist.

7. Herstellungsanlage nach einem der Ansprüche 1 bis 6, bei welcher die Rahmen ihr Modul an Austrittsführungen (8, 8') verlassen, **dadurch gekennzeichnet, dass** die Austrittsführungen einfahrbar bzw. einklappbar sind.

8. Herstellungsanlage nach einem der Ansprüche 1 bis 7, **dadurch gekennzeichnet, dass** zumindest eines der Module aus zumindest zwei Untermodulen gebildet ist.

9. Herstellungsanlage nach Anspruch 8, **dadurch gekennzeichnet, dass** das zumindest ein Untermodul eine Anzahl an Rahmen umfasst, die unabhängig variabel ist.

## Claims

1. An industrial production line for bakery products or the like, in which the pieces of dough produced in a forming phase are arranged on frames (4) and in which at least one of the steps of fermentation, cooking or precooking, cooling and freezing is carried out in a module comprising at least one elevator (1) on which said frames become hitched, which are driven forwards vertically through said module, said production line being **characterized in that** the number of frames in such a module is made variable by variation of the spacing between the frames.

2. A production line according to claim 1, **characterized in that** the elevator of a module comprises supports (5) or points for hitching of frames which are horizontal, equidistant and adapted to engage with the two opposite edges of a frame, and which are higher in number than the number of frames (4) that can be within said module.

3. A production line according to claim 1, **characterized in that** the frames (4) are engageable on the elevator at the entry of said module.

4. A production line according to claim 3, **characterized in that** the engagement is achieved by means of gripping on a cable, by means of a pressure ensured by a spring released at the moment of engagement, or by means of an electromagnetic or magnetic force released at the moment of engagement.

5. A production line according to any one of claims 1 to 4, in which at least one module comprises at least two sub-modules, **characterized in that** the number of frames in each of the said sub-modules is variable.

6. A production line according to any one of claims 1 to 5, **characterized in that** the cooking step is performed in a module comprising an elevator constituted by two endless sheets (2, 2').

7. A production line according to any one of claims 1 to 6, in which the frames leave their module on exit guides (8, 8'), **characterized in that** said exit guides are retractable.

8. A production line according to any one of claims 1 to 7, **characterized in that** at least one of the modules is constituted by at least two sub-modules.

9. A production line according to claim 8, **characterized in that** said at least one sub-module has an independently variable number of frames.
